(19) Europäisches Patentamt
European Patent Office
Office européen des brevets

(11) **EP 2 043 092 A1**

(12) **EUROPEAN PATENT APPLICATION**

(43) Date of publication:
**01.04.2009 Bulletin 2009/14**

(51) Int Cl.:
***G11B 7/085*** (2006.01)    ***G11B 7/095*** (2006.01)
***G11B 7/007*** (2006.01)    ***G11B 7/0065*** (2006.01)

(21) Application number: **08015071.7**

(22) Date of filing: **26.08.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(30) Priority: **28.09.2007 JP 2007255722**<br><br>(71) Applicant: **Hitachi, Ltd.**<br>**Chiyoda-ku**<br>**Tokyo 100-8280 (JP)** | (72) Inventors:<br>• **Ide, Tatsuro**<br>**Chiyoda-ku**<br>**Tokyo 100-8220 (JP)**<br>• **Shimada, Kenichi**<br>**Chiyoda-ku**<br>**Tokyo 100-8220 (JP)**<br><br>(74) Representative: **Strehl Schübel-Hopf & Partner**<br>**Maximilianstrasse 54**<br>**80538 München (DE)** |

(54) **Hologram recording and recovering device and method**

(57)    An object of this invention is to achieve a hologram information recording and recovering device using an angle multiplexing method capable of reducing crosstalk from an adjacent hologram. When a set of incident angles of reference light 223 on a disc in recording a hologram using the angle multiplexing method is expressed by $\{\theta\} = [\theta_1, \theta_2, ..., \theta_M]$, an incident angle $\{\theta\}$ of reference light 223 is changed according to a position on an optical information recording medium 1 or a track position.

FIG. 1

EP 2 043 092 A1

**Description**

CLAIMS OF PRIORITY

The present application claims priority from Japanese application JP 2007-255722 filed on September 28, 2007, the content of which is hereby incorporated by reference into this application.

BACKGROUND OF THE INVENTION

1. Field of the Invention

The present invention relates to holographic data storage devices, systems, articles, and methods for recording (storing) and/or reading (recovering) holographic data.

2. Description of the Related Art.

In recent years, the commercialization of an optical disc, having a data capacity of about 50 GB for consumer use, has been made possible due to Blue-ray Disc (BD) standard using a blue-violet semiconductor laser, High Definition Digital Versatile Disk (HD DVD) standard, and the like. In the future, there will be more and more demands for a larger-capacity optical disc, having the same capacity as HDD (Hard Disc Drive) of 100 GB to 1 TB. However, in order to achieve an optical disc having such very high density, what is needed is a new storage technique different from the trend of conventional high density techniques achieved with a short wavelength and a high NA objective lens as used so far.
Under the study of a next-generation storage technique, attention has been focused on the hologram recording technique that records digital information using the holography. In this hologram recording technique, signal light and reference light are superimposed in a recording medium. Here, the signal light has information of page data that is two-dimensionally modulated by a spatial light modulator (SLM). When the two signals are superimposed in a recording medium, interference fringe patterns are produced. By using these patterns, refractive index modulation is caused in the recording medium to thereby record information. At the time of recovering the recorded information, the recording medium is irradiated with the reference light used in recording with the same arrangement. Upon this irradiation, the hologram recorded in the recording medium acts as diffraction grating to generate diffracted light. The diffracted light is recovered as the same light as the recorded signal light, as having the same properties including the phase information. The recovered signal light is two-dimensionally detected at high speed using an optical detector such as a complementary metal-oxide semiconductor (CMOS) and a charge-coupled device (CCD). Thus, in the hologram recording, two-dimensional information can be recorded/recovered at the same time using one hologram and multiple page data is overwritten at the same location. This is therefore useful for recording and recovering large-capacity information at high speed.
As a hologram recording technique, Japanese Patent Application Publication No. 2004-272268 describes a so-called angle multiplexing method. In this system, a signal beam is focused on an optical information recording medium by a lens, and at the same time, the optical information recording medium is irradiated with reference light of a parallel beam to cause interference, thereby to perform hologram recoding. Further, multiplex recording is performed by displaying different page data on a spatial light modulator while changing an incident angle of reference light on the recording medium. This publication further describes a technique capable of increasing recording density/capacity as compared with the conventional angle multiplexing method. The high recording density/capacity is achieved by focusing signal light by the lens and by locating an aperture (spatial filter) at its beam waist, thereby making it possible to shorten a pitch between adjacent holograms. Moreover, WO2004-102542 describes an example using a shift multiplexing method. In this shift multiplex system, in one spatial light modulator, light from inner pixels is used as signal light, and light from outer annular pixels is used as reference light. A hologram is recorded by condensing both beams on an optical recording medium by use of the same lens, and by causing an interference, in the vicinity of a lens focal plane, between the signal light and the reference light.

SUMMARY OF THE INVENTION

By the way, in order to increase recording capacity in the hologram recording, a reduction in the pitch between the adjacent holograms is required for both the angle multiplexing method and the shift multiplex system. Also, in the angle multiplexing method, recording capacity can be increased by reducing an angle pitch between incident angles of reference light on the optical recording medium at the time of angle multiplex recording. However, the reduction in the pitch between the adjacent holograms or the angle pitch increases crosstalk between the holograms, resulting in deterioration in quality of a recovered signal.
Moreover, M/# (M number) is often used as an amount representing a dynamic range of a hologram recording medium. M/# is an index indicating how many holograms can be multiplexed at a predetermined position on the hologram recording medium (degree of multiplicity). M/# is determined by hologram recording material and a thickness of the medium, and therefore indicates an amount unique to the medium. When degree of multiplicity of the hologram is M and when diffraction efficiency $\eta$ of one hologram is equal to diffraction efficiency of all holograms, the following equation is expressed.

$$\eta = \left\{ \frac{M/\#}{M} \right\}^2 \qquad (1)$$

As shown in equation (1), when the degree of multiplicity M of the hologram is increased for the purpose of high density, diffraction efficiency $\eta$ of the hologram to be a signal is reduced by minus square with respect to the degree of multiplicity M. This also causes deterioration in quality of the recovered signal in high density.

In order to deal with such a problem, Japanese Patent Application Publication No. 2006-243243 describes a method of changing, in accordance with a track position on a disc, wavelength of a laser light source that performs recording and recovering in a shift multiplex system. However, in order to take such a method, it is indispensable to provide a tunable laser; a laser light source (wavelength-variable laser) that can change a wavelength of laser light. Moreover, since the wavelength of the laser light source that performs recording and recovering is changed according to the track position on the disc, there is a problem of chromatic aberration of the optical system. Further, when the wavelength of the laser light source that performs recording and recovering is changed according to the track position on the disc in the angle multiplex system, the wavelength of the laser light source and the incident angle of reference light must be optimally adjusted at the same time, resulting in a complicated recover process.

In view of the aforementioned problems, an object of the present invention is to provide a high reliable holographic data storage device using an angle multiplexing method and a hologram recording and/or recovering method.

A holographic storage device of the present invention includes: a laser light source; an optical element that forms signal light and reference light from a light beam emitted from the laser light source; a spatial light modulator that modulates the signal light; an optical information recording medium that records, as a hologram, an interference fringe caused by interference between the signal light modulated by the spatial light modulator and the reference light; an optical system that causes an interference, in the optical information recording medium, between the signal light modulated by the spatial light modulator and the reference light; a reference light angle control means for controlling an incident angle of the reference light on the optical information recording medium; and an optical detector that detects recovered light from the optical information recording medium. In this hologram recording and recovering device, the reference light angle control means causes the reference light to be incident on substantially the same position on the optical information recording medium at an incident angle $\{\theta\}$ including a plurality of incident angles $[\theta_1, \theta_2, ..., \theta_M]$ (M being an integer of two or more), and changes the incident angle of the reference light in accordance with a track position on the optical information recording medium.

The incident angle $\{\theta\}$ of the reference light on the optical information recording medium of reference light may be changed for every track position on the optical recording medium.

Moreover, in change of the incident angle $\{\theta\}$ of the incident angle, tracks of the optical information recording medium may be classified into a plurality of track groups each having two or more continuous tracks, and a different incident angle $\{\theta\}$ of the reference light may be used in accordance with the track groups. Here, the different incident angle $\{\theta\}$ is commonly used for tracks belonging to the corresponding same track group, and the different incident angle $\{\theta\}$ of the reference light may be used for each track group.

Further, in change of the incident angle $\{\theta\}$ of the reference light, tracks of the optical information recording medium may be classified into odd tracks and even tracks from an innermost periphery or outermost periphery. Then, a same incident angle $\{\theta\}$ of the reference light may be used for tracks classified into the odd tracks and a same incident angle $\{\theta\}$ of the reference light may be used for tracks classified into the even track groups. The incident angles $\{\theta\}$ of the reference light, different from each other, may be used respectively for the odd tracks and the even tracks.

Particularly, when the incident angle $\{\theta\}$ of the reference light on a hologram in the odd track is set to an incident angle $\{\theta\} = [\theta_1, \theta_2, ..., \theta_K, ..., \theta_M]$ (M is an integer of two or more), a kth incident angle $\theta_K$ may be set to an angle corresponding to an angle (2nd null) in which a recover light quantity of the kth hologram in the odd track becomes almost zero or minimum secondly when the incident angle is changed from the incident angle $\theta_{K-1}$. A kth incident angle $\theta'$ of the reference light on a hologram in the even track may be set to an angle corresponding to an angle (1st null) in which a recover light quantity of the kth hologram in the odd track becomes almost zero or minimum firstly.

The hologram recording and recovering device of the present invention can reduce crosstalk from the hologram of the adjacent track only by changing the incident angle of reference light according to the track position in the angle multiplexing method and can improve recording and recovering performance of the hologram. Moreover, since the hologram recording and recovering device using the angle multiplex system includes the reference light angle control means, an additional new mechanism is not needed. This prevents the device configuration from becoming complicated.

Moreover, the reference light angle control means of the hologram recording and recovering device of the present invention may be one that changes the incident angle $\{\theta\}$ of the reference light in accordance with a position on the optical information recording medium.

At this time, the incident angle $\{\theta\}$ of the reference light may be changed by using a different angle for every position on the optical recording medium. Further, the number of incident angles $\{\theta\}$ of the reference light may be three sets or more.

According to this configuration, it is possible to reduce crosstalk from the adjacent hologram only by changing the incident angle of reference light according to the track position in the angle multiplexing method and to improve recording and recovering performance of the hologram. Moreover, since the hologram recording and recovering device using the angle multiplex system includes the reference light angle control means, an additional new mechanism is not needed. This prevents the device configuration from becoming complicated.

The hologram recording and recovering device may further include a reference light angle information detection means for obtaining incident angle information of reference light in accordance with a track position on a hologram recording medium or a recording position. The reference light angle information is recorded in the hologram recording and recovering device, the optical information recording medium, or a predetermined recording means included in a cartridge that houses the optical information recording medium. The reference light angle control means may change the incident angles of the reference light in accordance with a track position of the reference light or a recording position on the basis of reference light angle information obtained by the reference light angle information detection means.

Moreover, the reference light angle information detection means may further obtain an incident angle of reference light necessary for recovering a hologram already recorded on the optical information recording medium. The reference light angle control means may change the incident angles of the reference light in accordance with a track position or a recording position on the optical information recording medium on the basis of the reference light angle information obtained by the reference light angle information detection means.

The shape of the optical information recording medium may be a card-shape without being limited to a disc shape.

According to the present invention, it is possible to provide a hologram information recording device, hologram information recovering device, hologram information recording and recovering device, and hologram recording and recovering method, all of which is used in an angle multiplexing method and is highly reliable.

BRIEF DESCRIPTION OF THE DRAWINGS

Fig. 1 is a schematic view showing a hologram information recording and recovering device according to a first embodiment of the present invention;

Fig. 2 is a schematic view showing an optical pickup in the hologram information recording and recovering device according to the first embodiment of the present invention;

Fig. 3 is a schematic view showing an operation flow of the hologram information recording and recovering device according to the first embodiment of the present invention;

Fig. 4 is a view showing a relationship between an incident angle shift of reference light and diffraction efficiency in recording and recovering in an angle multiplex system;

Fig. 5 is a view showing a relationship between a hologram recorded on an optical information recording medium and reference light;

Fig. 6 is a schematic view showing one example of an angle multiplex system of the hologram recording and recovering device according to the first embodiment of the present invention;

Fig. 7 is a schematic view showing one example of an angle multiplex system of the hologram recording and recovering device according to the first embodiment of the present invention;

Fig. 8 is a schematic view showing one example of an angle multiplex system of the hologram recording and recovering device, according to the first embodiment of the present invention, using a card-type optical information recording medium;

Fig. 9 is a schematic view showing a hologram information recording and recovering device according to the first embodiment of the present invention;

Fig. 10 is a schematic view showing one example of an angle multiplex system of the hologram recording and recovering device according to a second embodiment of the present invention; and

Fig. 11 is a schematic view showing one example of an angle multiplex system of the hologram recording and recovering device, according to the second embodiment of the present invention, using a card-type optical information recording medium.

## DETAILED DESCRIPTION OF THE PREFERRED EMBODIMENTS

The following will explain embodiments of the present invention.

[First Embodiment]

Entire configuration of hologram information recording and recovering device

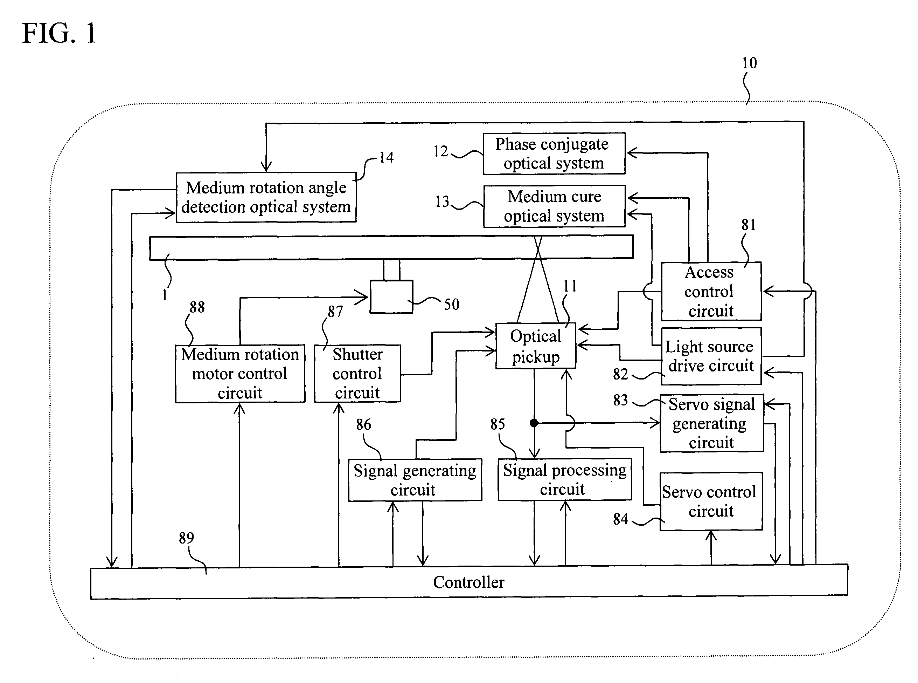

Fig. 1 shows an entire configuration of a hologram information recording and recovering device that records and/or recovers information on/from an optical information recording medium, by using holography.

A hologram information recording and recovering device 10 includes an optical pickup 11, a phase conjugate optical system 12, a medium cure optical system 13, a medium rotation angle detection optical system 14, and a rotation motor 50. An optical information recording medium 1 is made rotatable by the rotation motor 50. The optical pickup 11 emits reference light and signal light to the optical information recording medium 1 and records digital information by using holography. A controller 89 sends, via a signal generating circuit 86, an information signal to be recorded to a later-described spatial light modulator provided in the optical pickup 11. Then, the signal light is modulated by the spatial light modulator.

The phase conjugate optical system 12 generates phase conjugate light of the reference light emitted from the optical pickup 11 in order to recover information recorded on the optical information recording medium 1. The phase conjugate light mentioned here indicates a light wave that travels in an opposite direction to that of an input light while keeping the same wave surface as that of the input light. A later-described optical detector provided in the optical pickup 11 detects light to be recovered by the phase conjugate light. Then, a signal is recovered by a signal processing circuit 85. The controller 89 controls opening and closing time of a later-described shutter provided in the optical pickup 11 via a shutter control circuit 87 in order to adjust irradiation time of reference light and signal light with which the optical information recording medium 1 is irradiated.

The medium cure optical system 13 generates a light beam for use in pre-cure and post-cure of the optical information recording medium 1. The pre-cure mentioned here indicates a pre-process in which the optical information recording medium 1 is irradiated with a predetermined light beam in advance before irradiated with the reference light and signal light at the time of recording information on a desired position in the optical information recording medium 1. Also, the post-cure indicates a post-process performed after information is recorded at a desired position in the optical information recording medium 1. To be specific, the post-cure is to irradiate the desired position with a predetermined light beam in order to make it impossible to perform additional recording thereon.

The medium rotation angle detection optical system 14 is used to detect a rotation angle of the optical information recording medium 1. In order to adjust the optical information recording medium 1 to a predetermined rotation angle, the medium rotation angle detection optical system 14 detects a signal according to a rotation angle. Then, by using the detected signal, the controller 89 controls the rotation angle of the optical information recording medium 1 via a medium rotation motor control circuit 88. A light source drive circuit 82 supplies a predetermined light source drive current to light sources of the optical pickup 11, the medium cure optical system 13, and the medium rotation angle detection optical system 14. Thereby, a light beam is emitted, from each light source, with a predetermined light quantity.

Moreover, each of the optical pickup 11, the phase conjugate optical system 12, and the medium cure optical system 13 has a mechanism capable of sliding its position in a radial direction of the optical information recording medium 1 to perform positional control via an access control circuit 81. Additionally, when the optical pickup 11, the phase conjugate optical system 12 and the medium cure optical system 13 are difficult to slide due to their large size, a configuration that slides the optical information recording medium 1 may be used in place of sliding their positions in the radial direction of the optical information recording medium 1.

By the way, since the recording technique using holography is capable of recording very high-density information, tolerances on, for example, an inclination and a positional shift of the optical information recording medium 1 tend to be extremely small. Accordingly, a servo mechanism may be provided in the hologram information recording and recovering device 10 in order to correct an amount of shift caused due to small tolerances on, for example, an inclination and a positional shift of the optical information recording medium 1. The amount of shift is corrected by providing, in the optical pickup 11, a mechanism that detects the amount of shift, by causing a servo signal generating circuit 83 to generate a servo control signal, and by correcting, via a servo control circuit 84, the amount of shift by use of the detected servo control signal.

Furthermore, as for the optical pickup 11, the phase conjugate optical system 12, the medium cure optical system 13, and the medium rotation angle detection optical system 14, some optical system configurations or all optical system configurations may be combined into one for simplification.

Pickup optical system configuration

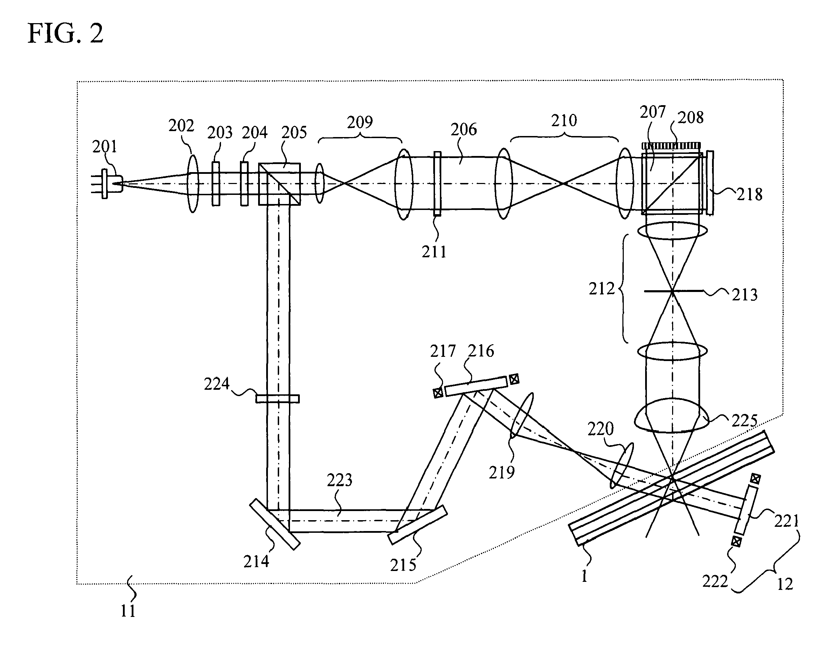

Fig. 2 shows one example of the optical system configuration of the optical pickup 11 in the hologram information recording and recovering device 10.

A light beam emitted from a light source 201 transmits through a collimate lens 202 and is incident on a shutter 203. When the shutter 203 is opened, the light beam passes through the shutter 203. Thereafter, an optical element 204 controls the polarization direction of the light beam so that a light quantity ratio between P polarization and S polarization reaches a desired value. The optical element 204 is formed of, for example, a half wave plate. After that, the light beam with the controlled polarization direction is incident on a polarization beam splitter 205.

A light beam 206 transmitted through the polarization beam splitter 205 is expanded by a beam expander 209 in its beam diameter. Thereafter, the light beam 206 is incident on a spatial light modulator 208 via a phase mask 211, relay lenses 210 and a polarization beam splitter 207. A signal beam to which information is added by the spatial light modulator 208 transmits through the polarization splitter 207 and passes through relay lenses 212 and a spatial filter 213. After that, the signal beam is focused on the optical information recording medium 1 by an objective lens 225.

On the other hand, a light beam 223 reflected by the polarization beam splitter 205 serves as a reference beam and is set, according to recording time or recovering time, to a predetermined polarization direction by a polarizing device 224. Thereafter, the light beam 223 is incident on a galvo mirror 216 through a mirror 214 and a mirror 215. The galvo mirror 216 can be adjusted in its angle by an actuator 217, and therefore an incident angle of a reference beam, which is to be incident on the information recording medium 1 after passing through a lens 219 and a lens 220, can be set to a desired angle.

Thus, an interference fringe pattern is formed in the recording medium by causing the signal beam 206 and the reference beam 223 to be incident on the optical information recording medium 1 so as to be superimposed on each other. Information is recorded by writing this pattern in the recording medium. Moreover, since the incident angle of the reference beam to be incident on the optical information recording medium 1 can be changed by the galvo mirror 216, angle multiplex recording can be performed.

In order to recover the recorded information, as mentioned above, the reference beam is made incident on the optical information recording medium 1, and the light beam transmitted through the optical information recording medium 1 is reflected by a galvo mirror 221, whereby its phase conjugate light is generated. The galvo mirror 221 can be adjusted in its angle by an actuator 222 and is driven in interlock with the galvo mirror 216 when information recorded on the optical information recording medium 1 is recovered. The light recovered by use of the phase conjugate light passes through the objective lens 225, the relay lenses 212 and the spatial filter 213. After that, the recovered light beam is reflected by the polarization beam splitter 207, and incident on the optical detector 218 to recover the recorded signal.

It should be noted that the optical system configuration of the optical pickup 11 is not limited to that in Fig. 2. In the configuration in Fig. 2, the spatial light modulator 208 and the optical detector 218 are arranged on the same side with respect to the optical information recording medium 1 because the signal light passes through the same relay lenses 212, the spatial filter 213 and the objective lens 225 at both the hologram recording time and recovering time due to the use of phase conjugate light. However, for example, the optical detector 218 may be disposed on an opposite side to the spatial light modulator 208 with respect to the optical information recording medium 1 to recover the signal using the same reference light used at the recording time, in place of the phase conjugate light.

Operation flow

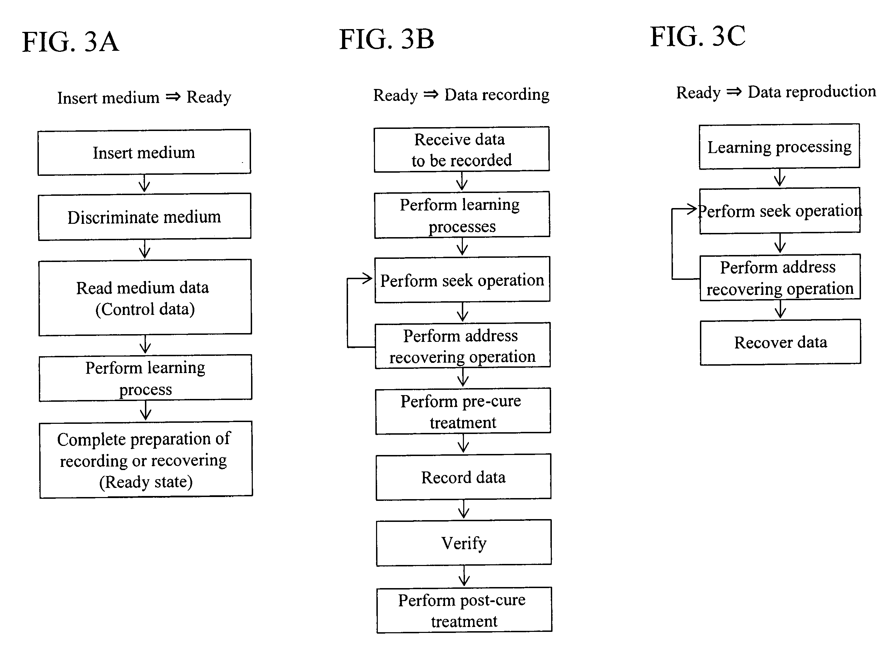

Fig. 3 shows an operation flow of recording and recovering in the hologram information recording and recovering device 10. Fig. 3A shows an operation flow from time when the optical information recording medium 1 is inserted to the hologram information recording and recovering device 10 to time when preparation for recording or recovering is completed. Fig. 3B shows an operation flow from time when preparation for recording is completed to time when information is recorded on the optical information recording medium 1. Fig. 3C shows an operation flow from time when preparation for recovering is completed to time when information recorded on the optical information recording medium 1 is recovered.

As shown in Fig. 3A, when the medium is inserted, the hologram information recording and recovering device 10 reads control data provided on the optical information recording medium 1 to acquire information on, for example, the optical information recording medium 1 and information on various setting conditions at the recording and recovering time. After reading the control data, the hologram information recording and recovering device 10 performs various adjustments according to the control data and learning processing relating to the optical pickup 11 and completes the preparation for recording or recovering.

The operation flow from time when preparation for recording is completed to time when information is recorded on the optical information recording medium 1 is described in the following. As shown in Fig. 3B, the hologram information recording and recovering device 10 first receives data to be recorded and sends information according to the data to the spatial light modulator 208 provided in the optical pickup 11. Thereafter, the hologram information recording and recovering device 10 performs various learning processing in advance as needed in order to record high quality information on the optical information recording medium 1. Then, the optical pickup 11 and the medium cure optical system are placed at predetermined positions of the optical information recording medium 1 while repeating a seek operation and an address recover. After that, the hologram information recording and recovering device 10 performs pre-cure of a predetermined area using a light beam emitted from the medium cure optical system 13 and records data using the reference light and the signal light emitted from the optical pickup 11. After recording the data, the hologram information recording and recovering device 10 verifies the data as needed and performs post-cure using the light beam emitted from the medium cure optical system 13.

The operation flow from time when preparation for recovering is completed to time when information recorded on the optical information recording medium 1 is recovered is described below. As shown in Fig. 3C, the hologram information recording and recovering device 10 performs various learning processing in advance as need in order to recover high quality information from the optical information recording medium 1. Thereafter, the optical pickup 11 and the phase conjugate optical system 12 are placed at predetermined positions of the optical information recording medium 1 while repeating a seek operation and an address recover. After that, the hologram information recording and recovering device 10 causes the optical pickup 11 to emit a reference light to the optical information recording medium 1, so as to read the data recorded thereon and reads the data recorded on the optical information recording medium 1.

Angle selectivity

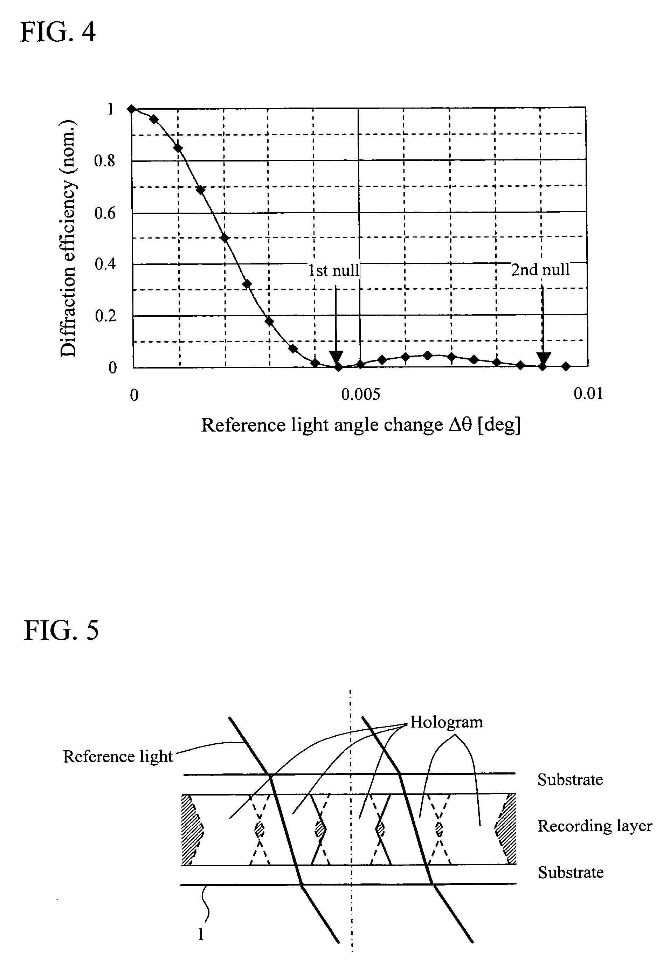

Fig. 4 is a graph showing angle shift of reference light the shift of angle of reference light on the optical information recording medium 1, from the time of recording on the optical information recording medium 1, to the time of recover therefrom. Fig. 4 also shows diffraction efficiency of each recovered light. Diffraction efficiency $\eta$ of the hologram is expressed by the following equation when a hologram recorded by using reference light having an incident angle $\theta$ on the optical information recording medium 1 is recovered by using reference light having an incident angle $\theta'$, and the hologram has extremely high angle selectivity with respect to the incident angle of reference light.

$$\eta = \sin c^2 \left\{ \frac{\pi n L}{\lambda} \frac{\sin \theta_{RS}}{\cos \theta_S} \Delta \theta \right\} \qquad (2)$$

where $\Delta\theta$ is $\theta' - \theta$ that is shift of incident angles of reference light on the optical information recording medium 1 at the time of recording and that at the time of recovering, $\theta_S$ is an incident angle of signal light on the optical information recording medium 1, $\theta_{RS}$ is an angle formed by incident angles of signal light and reference light on the optical information recording medium 1, $\lambda$ is a wavelength of a laser light source, n is an index of refraction of recording material, and L is a thickness of the recording material.

As shown in Fig. 4, when the angle of reference light is shifted by an angle of 0.005 degrees from the incident angle of reference light used in recording, the diffraction efficiency becomes almost zero. The incident angle of reference light whose diffraction efficiency becomes almost zero or minimum is called null. The following equation expresses angle shift $\Delta\theta$ of reference light whose diffraction efficiency becomes almost zero.

$$\Delta \theta = m \cdot \frac{\lambda}{nL} \frac{\cos \theta_S}{\sin \theta_{RS}} \quad (m = 1, 2, ...) \qquad (3)$$

An incident angle of reference light with null appears periodically. As shown in Fig. 4, first and second nulls are called 1st null and 2nd null, respectively. In the case of the angle multiplex recording, a hologram is recoded using reference light having a certain incident angle, and then a next hologram is recorded by using reference light having an incident angle with 2nd null of the previously recorded hologram, for example. Repetition of this operation makes it possible to suppress crosstalk from a different hologram recorded at the same position.

Crosstalk between holograms in angle multiplex recording

As shown in Fig. 2, in the angle multiplex system, signal light and reference light are made incident on the optical information recording medium 1, as convergent light and as parallel light, respectively. However, in the case where pitch between adjacent holograms is reduced for the purpose of densification and a certain hologram is recorded, as shown in Fig. 5, at the time of recovering the certain hologram, an adjacent hologram is simultaneously recovered by the irradiation of the reference light for recovering. The recovered light becomes a crosstalk component. If the certain hologram is recorded at the incident angle of the same reference light as that used in the adjacent hologram, at the time of recovering the certain hologram, the adjacent hologram is also recovered with a high diffraction efficiency. Consequently, crosstalk effect increases. However, by recording a certain hologram using reference light the incident angle of which is shifted from an incident angle of the adjacent hologram due to the high angle selectivity shown in Fig. 4, crosstalk from the adjacent hologram can be suppressed.

Embodiment of hologram recording and recovering device using angle multiplexing method

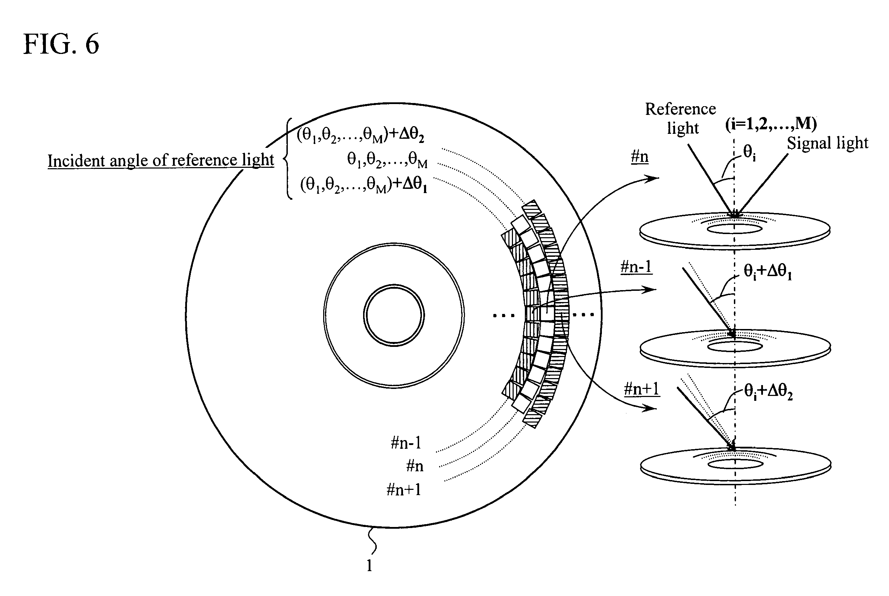

Fig. 6 shows an example of a hologram multiplex system in the optical system configuration of the optical pickup 11 shown in Fig. 2, according to the present embodiment. This example shows a case in which a hologram is recorded on the disc-like optical information recording medium 1 along a concentric track. This also shows a case in which an incident plane of signal light and reference light is parallel in a circumferential direction of the disc.

In the angle multiplexing method shown in this example, when a set of incident angles of reference light on the disc in recording the hologram at a certain position on the disc is expressed by $\{\theta\}$, the incident angle $\{\theta\}$ of reference light on the disc is changed according to the track position (radius position) of disc. For example, Fig. 6 shows a hologram on which adjacent three tracks (#n-1, #n, and #n+1) on the disc is recorded. Assume that recording is made on track #n where degree of angle multiplex is M and where an incident angle $\{\theta\}$ of reference light on the disc is $\{\theta\} = [\theta_1, \theta_2, ...\theta_M]$. At this time, tracks #n-1 and #n+1 are $\{\theta\} = [(\theta_1, \theta_2, ..., \theta_M) + \Delta\theta_1], [(\theta_1, \theta_2, ..., \theta_M) + \Delta\theta_2]$, respectively (where $\Delta\theta_1, \Delta\theta_2 \neq 0$). This makes it possible to reduce crosstalk from the holograms of the tracks #n-1 and #n+1 and to achieve good signal recover in recovering the hologram of the track #n.

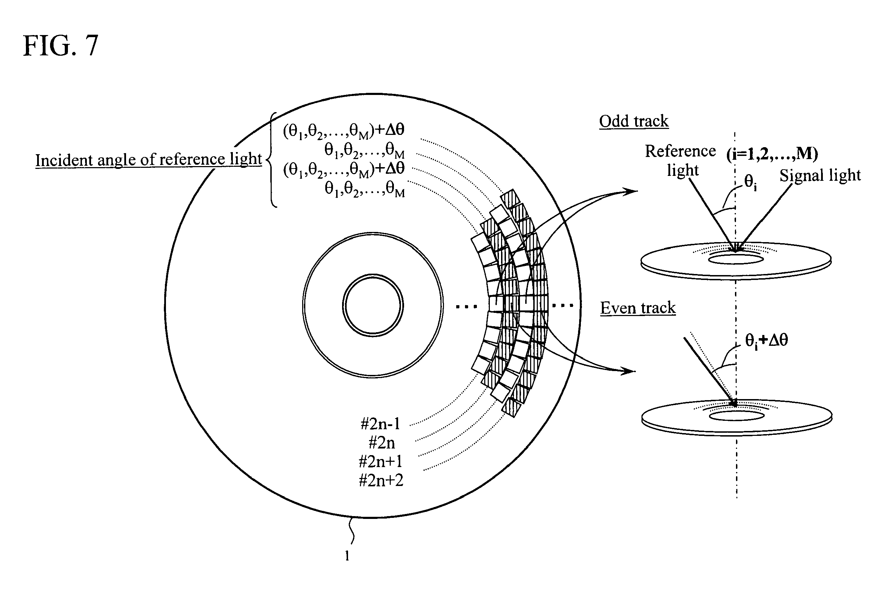

Different incident angles of reference light may be used for each track from the innermost periphery to the outermost periphery of the disc, or a part of the incident angles may be overlapped. Otherwise, the incident angle of reference light to be allocated may be repeated for every several continuous tracks on the disc. For example, when k is an integer of 2 or more, k tracks continuous from the innermost periphery or the outermost periphery of the disc are used as one unit. Regarding first continuous tracks k, an incident angle of reference light on track #i ($1 \leq i \leq k$) is set to $\{\theta_i\} = [(\theta_1, \theta_2, ..., \theta_M) + \Delta\theta_i]$ (where $\Delta\theta_i \neq 0$, $\Delta\theta_i \neq \Delta\theta_{i+1}$). Regarding next continuous tracks k ($k+1 \leq i \leq 2k$), an incident angle of reference light is also set to $\{\theta_i\} = [(\theta_1, \theta_2, ..., \theta_M) + \Delta\theta_i]$. This may be repeated for the entire tracks on the disc. According to this method, at least two types of incident angles of reference light, $\{\theta\} = [\theta_1, \theta_2, ..., \theta_M]$ and $[(\theta_1, \theta_2, ..., \theta_M) + \Delta\theta]$ may be repeated. For example, as shown in Fig. 7, an odd track on the disc may be set to $\{\theta\} = [\theta_1, \theta_2, ..., \theta_M]$ and an even track may be set to $\{\theta\} = [(\theta_1, \theta_2, ..., \theta_M) + \Delta\theta]$.

Regarding the method for changing the incident angle of reference light, in order to reduce crosstalk as much as possible, it is preferable that recording and recovering be made at the incident angle $\{\theta\}$ of reference light on the corresponding track and the incident angle $\{\theta\}$ of reference light on the adjacent track, both of which have almost null values. More specifically, for example, when angle multiplex recording is performed at 2nd null on the entire tracks, the hologram of the odd track is recorded at the incident angle of reference light, $\{\theta\} = [\theta_1, \theta_2, ..., \theta_K, ..., \theta_M]$. Then, the hologram of the even track is recorded at 1st null, $\{\theta'\} = [(\theta_1', \theta_2', ..., \theta_K', ..., \theta_M')]$, of the odd hologram. As a result, it is possible to perform high-density recording with an angle pitch reduced as much as possible and to suppress crosstalk from the adjacent track to almost zero. Here, the following equations are established.

$$\theta_K = \theta_{K-1} + \Delta\theta_{2nd\ null} \qquad (4)$$

$$\theta_K' = \theta_K + \Delta\theta_{1st\ null} \qquad (5)$$

It should be noted that $\Delta\theta_{2nd\ null}$ in equation (4) is 2nd null of the hologram recorded at the incident angle $\theta_K$ of reference light and that $\Delta\theta_{1st\ null}$ in equation (5) is 1st null of the hologram recorded at the incident angle $\theta_K$ of reference light.

Additionally, in order to suppress the crosstalk from the adjacent track, the incident angle of reference light used in recording and recovering the hologram of the adjacent track does not need to be set so that the diffraction efficiency is zero. Namely, the diffraction efficiency is decided depending on an amount of crosstalk that is generated, a changeable range of the reference light angle, a minimum angle variation, and the like.

Regarding the incident angle of reference light, incident angle information may be prepared in advance in, for example, the controller 89 of the hologram recording and recovering device 10 to read the incident angle information when information is recorded. Otherwise, the incident angle information may be recorded in advance in the optical information recording medium 1 or a predetermined recording means included in a cartridge that houses the optical information recording medium 1 to read the incident angle information when information is recorded.

Further, the incident angle of reference light may be determined by recovering the hologram already recorded on the optical information recording medium 1 in order to detect an incident angle of reference light having an almost maximum recover light quantity. The incident angle of reference light may be detected from a drive current of the actuator 217 that controls the orientation of the galvo mirror 216 for reference light, in the optical pickup shown in Fig. 2, for example. When a certain hologram is recorded at the position adjacent to the already recorded hologram by using the angle multiplexing method, an incident angle of reference light for the certain hologram may be decided in accordance with the information of the incident angle of reference light thus detected, so as to reduce the crosstalk.

Furthermore, the hologram recording and recovering device of this embodiment may include a tilt detection means for detecting a tilt angle of the optical information recording medium 1 with respect to its reference position, in order to correct an incident angle of reference light in accordance with the tilt of the optical information recording medium 1 detected by the tilt detection means. The tilt detection means may be, for example, a laser tilt sensor that detects an angle by emitting a laser beam to a surface of the optical information recording medium and by reading the reflected light.

This embodiment shows the case in which the signal light and reference light are incident in a circumferential direction of the disc. However, the incident surfaces of the signal light and reference light are not limited to this. For example, the signal light and the reference light may be incident in a radial direction of the disc. Moreover, this embodiment shows the case in which the hologram is recorded concentrically. However, the form of data tracks is not limited to this. For example, the hologram may be recorded spirally.

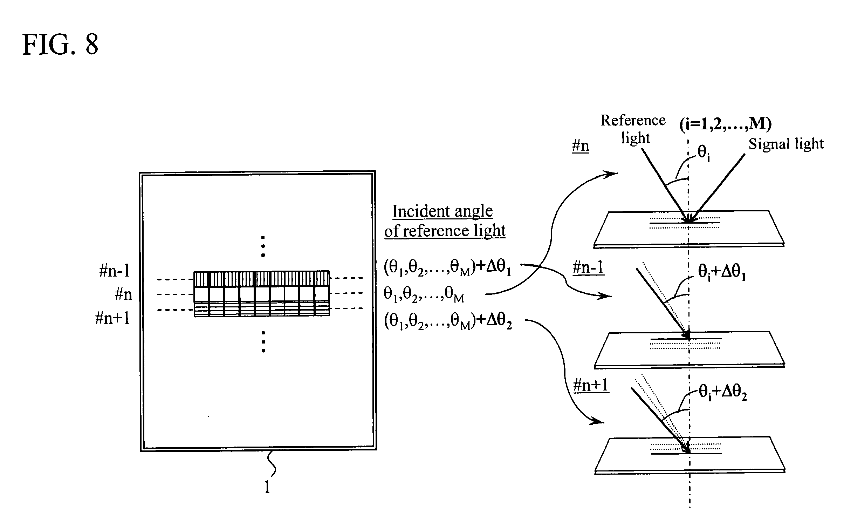

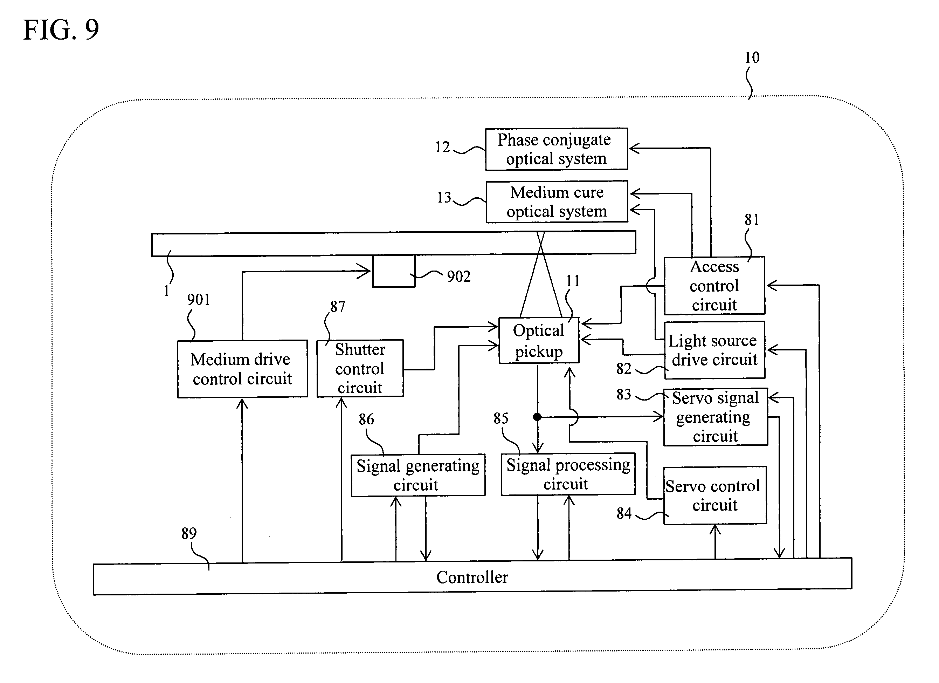

Further, although the optical information recording medium 1 is disc-shaped in this embodiment, the present invention is not limited to this. For example, the optical information recording medium 1 may be a card-like medium as shown in Fig. 8. Fig. 9 is an entire configuration of the information recording and recovering device when the card-like optical information recording medium 1 shown in Fig. 8 is used. The hologram information recording and recovering device 10 includes the optical pickup 11, the phase conjugate optical system 12, the medium cure optical system 13, and a medium drive motor 902. The optical information recording medium 1 is capable of moving by being driven by the medium drive motor 902. The medium drive motor 902 is driven, via a medium drive control circuit 901, by the controller 89. Additionally, although, in Fig. 9, the optical information recording medium 1 is configured to be driven, in place of driving the optical information recording medium 1, a mechanism may be provided that slides the positions of the optical pickup 11, the phase conjugate optical system 12, and the medium cure optical system 13 to perform positional control via the access control circuit 81.

[Second Embodiment]

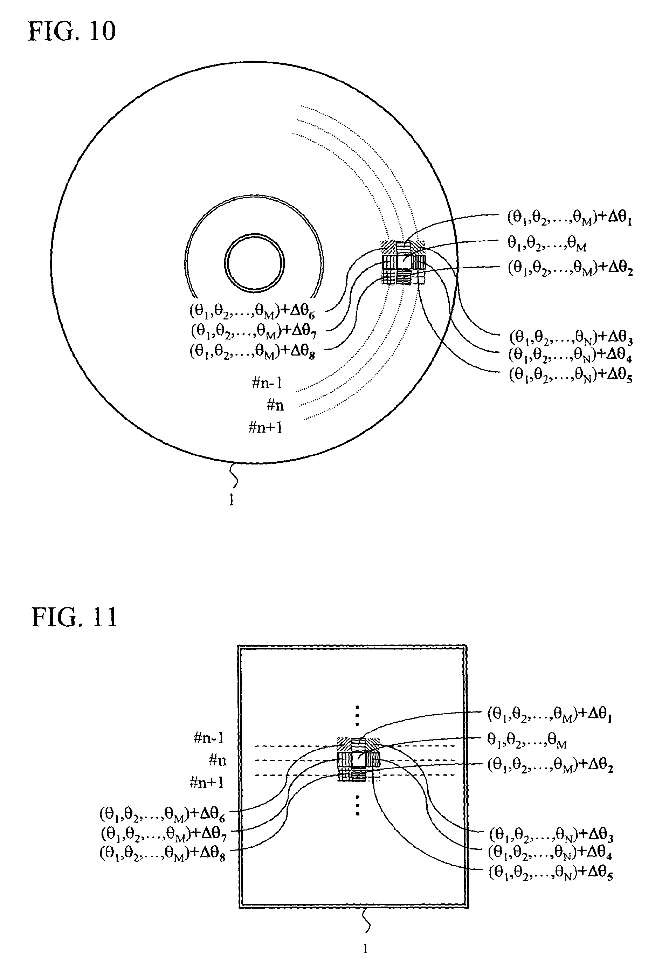

Fig. 10 shows one example of a hologram multiplex system in the optical system configuration of the optical pickup 11 shown in Fig. 2, according to this embodiment. This example shows a case in which a hologram is recorded on the disc-like optical information recording medium 1 along a concentric track. This example also shows a case in which an incident plane of signal light and reference light is parallel in a circumferential direction of the disc. Note that, in the explanation of Fig. 10, the explanation of the same portions as those of the first embodiment is omitted.

In the angle multiplexing method shown in this example, when a set of incident angles of reference light on the disc in recording a hologram at a certain position on the disc is expressed by $\{\theta\}$, the incident angle $\{\theta\}$ of reference light on the disc is changed according to the track position (radius r, orientation $\varphi$) of disc. For example, Fig. 10 shows eight holograms adjacent to a certain hologram on the disk. Assume that information is recorded when degree of angle multiplex is M and when an incident angle $\{\theta\}$ of reference light on the disc is $\{\theta\} = [\theta_1, \theta_2, ..., \theta_M]$. In this case, each of the adjacent eight holograms is $\{\theta\} = [(\theta_1, \theta_2, ..., \theta_M) + \Delta\theta_i]$ (i = 1, 2, ..., 8). Here, all of $\Delta\theta_i$ (i = 1, 2, ..., 8) do not have to be different and the value is decided by an amount of crosstalk generated, a changeable range of the reference light angle, a minimum angle variation, and the like. Moreover, according to this method, at least three sets of incident angles of reference light, that is, $\{\theta\} = [\theta_1, \theta_2, ..., \theta_M]$, $[(\theta_1, \theta_2, ..., \theta_M) + \Delta\theta_1]$, $[(\theta_1, \theta_2, ..., \theta_M) + \Delta\theta_2]$, are sufficient in order to prevent the use of the same incident angle as that of the adjacent hologram. For example, in the arrangement shown in Fig. 10, if three sets of incident angles $\{\theta\}$ are prepared as $\Delta\theta_5 = \Delta\theta_6 = 0$, $\Delta\theta_4 = \Delta\theta_8 = \Delta\theta_1$, $\Delta\theta_3 = \Delta\theta_7 = \Delta\theta_2$, the crosstalk from the adjacent hologram can be sufficiently suppressed.

Regarding the method for changing the incident angle of reference light, in order to reduce crosstalk as much as possible, it is preferable that recording and recovering be made at the incident angle $\{\theta\}$ of reference light on a certain hologram and an incident angle $\{\theta\}$ of reference light on the hologram adjacent to the certain hologram, both of which have almost null values. However, the incident angle of reference light used in recording and recovering the adjacent hologram does not need to be set so that the diffraction efficiency is zero. Namely, the diffraction efficiency is decided depending on an amount of crosstalk that is generated, a changeable range of the reference light angle, a minimum angle variation, and the like.

Regarding the incident angle of reference light in this embodiment, incident angle information may be prepared in advance in, for example, the controller 89 of the hologram recording and recovering device 10 to read the incident angle information when information is recorded. Otherwise, the incident angle information may be recorded in advance in the optical information recording medium 1 or a predetermined recording means included in a cartridge that houses the optical information recording medium 1 to read the incident angle information when information is recorded.

Further, also in this embodiment, the incident angle of reference light may be determined by recovering the hologram already recorded on the optical information recording medium 1 in order to detect an incident angle of reference light having an almost maximum recover light quantity. The incident angle of reference light may be detected from a drive current of the actuator 217 that controls the orientation of the galvo mirror 216 for reference light, in the optical pickup shown in Fig. 2, for example. When the hologram at the position adjacent to the hologram is recorded by using the angle multiplexing method, an incident angle of reference light may be decided in accordance with the information of the incident angle of reference light thus detected, so as to reduce the crosstalk.

Furthermore, the hologram recording and recovering device of this embodiment may include a tilt detection means for detecting a tilt angle of the optical information recording medium 1 with respect to its reference position, in order to correct an incident angle of reference light in accordance with the tilt of the optical information recording medium 1 detected by the tilt detection means. The tilt detection means may be, for example, a laser tilt sensor that detects an angle by emitting a laser beam to a surface of the optical information recording medium and by reading the reflected light.

This embodiment shows the case in which the signal light and reference light are incident in a circumferential direction of the disc. However, the incident surfaces of the signal light and reference light are not limited to this. For example, the signal light and the reference light may be incident in a radial direction of the disc. Moreover, this embodiment shows the case in which the hologram is recorded concentrically. However, the form of data tracks is not limited to this. For example, the hologram may be recorded spirally. Further, although the optical information recording medium 1 is disc-shaped in this embodiment, the present invention is not limited to this. For example, the optical information recording medium 1 may be a card-like medium as shown in Fig. 11.

According to the hologram recording and recovering device of the present invention, the incident angle of reference light is changed according to the radial position or recording position on the optical information recording medium in the angle multiplexing method. Accordingly, it is possible to reduce crosstalk from the adjacent track or adjacent recording position and to implement the hologram recording and recovering device with high reliability.

## Claims

1. A holographic storage device or system comprising:

    a laser light source (201);
    an optical element (205) that forms signal light (206) and reference light (223) from a light beam emitted from the laser light source (201);
    a spatial light modulator (208) that modulates the signal light (206);
    an optical information recording medium (1) that records, as a hologram, an interference fringe caused by interference between the signal light (206) modulated by the spatial light modulator (208) and the reference light (223);
    an optical system that causes an interference, in the optical information recording medium (1), between the signal light (206) modulated by the spatial light modulator (208) and the reference light (223);
    a reference light angle control means (216, 217) for controlling an incident angle of the reference light (223) on the optical information recording medium (1); and
    an optical detector (218) that detects recovered light from the optical information recording medium (1), wherein the reference light angle control means (216, 217) causes the reference light (223) to be incident on substantially the same position on the optical information recording medium (1) at an incident angle $\{\theta\}$ including a plurality of different incident angles $[\theta_1, \theta_2, ..., \theta_M]$ (M being an integer of two or more), and changes the incident angle $\{\theta\}$ of the reference light (223) in accordance with a track position on the optical information recording medium (1).

2. The device or system of claim 1, wherein the reference light angle control means (216, 217) classifies tracks of the optical information recording medium (1) into a plurality of track groups each having two or more continuous tracks, uses a different incident angle $\{\theta\}$ of the reference light (223) in accordance with the track groups, the different incident angle $\{\theta\}$ being commonly used for tracks belonging to the corresponding same track group, and repeatedly uses the different incident angle $\{\theta\}$ of the reference light (223) for each track group.

3. The device or system of claim 1, wherein the reference light angle control means (216, 217) classifies tracks of the optical information recording medium (1) into odd tracks and even tracks from an innermost periphery or outermost periphery, uses a same incident angle $\{\theta\}$ of the reference light (223) for tracks classified into the odd tracks and a same incident angle $\{\theta\}$ of the reference light (223) for tracks classified into even track groups, and uses the incident angles $\{\theta\}$ of the reference light (223), different from each other, respectively for the odd tracks and the even tracks.

4. The device or system of claim 3, wherein:

when the incident angle $\{\theta\}$ of the reference light (223) on a hologram in the odd track is set to an incident angle $\{\theta\} = [\theta_1, \theta_2, ..., \theta_K, ..., \theta_M]$ (M being an integer of two or more), a $k^{th}$ incident angle $\theta_K$ is set to an angle corresponding to an angle ($2^{nd}$ null) in which a recover light quantity of the $k^{th}$ hologram in the odd track becomes almost zero or minimum secondly when the incident angle is changed from the incident angle $\theta_{K-1}$; and a $k^{th}$ incident angle $\theta'$ of the reference light (223) on a hologram in the even track is set to an angle corresponding to an angle ($1^{st}$ null) in which a recover light quantity of the $k^{th}$ hologram in the odd track becomes almost zero or minimum firstly.

5. A holographic storage device or system comprising:

a laser light source (201);
an optical element (205) that forms signal light (206) and reference light (223) from a light beam emitted from the laser light source (201);
a spatial light modulator (208) that modulates the signal light (206);
an optical information recording medium (1) that records, as a hologram, an interference fringe caused by interference between the signal light (206) modulated by the spatial light modulator (208) and the reference light (223);
an optical system that causes an interference, in the optical information recording medium (1), between the signal light (206) modulated by the spatial light modulator (208) and the reference light (223);
reference light angle control means (216, 217) for controlling an incident angle of the reference light (223) on the optical information recording medium (1); and
an optical detector (218) that detects recovered light from the optical information recording medium (1), wherein in the hologram recording and recovering device in which the reference light angle control means (216, 217) causes the reference light (223) to be incident on substantially the same position on the optical information recording medium (1) at a plurality of different incident angles $\{\theta\} = [\theta_1, \theta_2, ..., \theta_M]$ (M being an integer of two or more), the reference light angle control means (216, 217) changes the incident angle $\{\theta\}$ of the reference light (223) in accordance with a position on the optical information recording medium (1).

6. The device or system of claim 1 or 5, wherein the reference light angle control means (216, 217) changes the incident angle $\{\theta\}$ of the reference light (223) for every position on the optical recording medium (1).

7. The device or system of claim 5, wherein the reference light angle control means (216, 217) uses three sets or more of incident angles $\{\theta\}$ of the reference light (223).

8. The device or system of claim 1 or 5, wherein:

incident angle information of the reference light (223) is recorded in any one of the hologram recording and recovering device, the optical information recording medium (1), and predetermined recording means included in a cartridge that houses the optical information recording medium (1); and
the reference light angle control means (216, 217) controls the incident angles $\{\theta\}$ of the reference light (223) the basis of the incident angle information of the reference light (223).

9. The device or system of claim 1 or 5, further comprising reference light angle information detection means for obtaining an incident angle of reference light (223) necessary for recovering a hologram already recorded on the optical information recording medium (1), wherein the reference light angle control means (216, 217) changes the incident angles $\{\theta\}$ of the reference light (223) in accordance with a position on the optical information recording medium (1) on the basis of the reference light angle information obtained by the reference light angle information detection means.

10. The device or system of claim 1 or 5, further comprising tilt detection means for detecting a tilt angle of the optical information recording medium (1) with respect to a reference position, wherein the reference light angle control means (216, 217) corrects the incident angles $\{\theta\}$ of the reference light (223) in accordance with the tilt of the optical information recording medium (1), the tilt detected by the tilt detection means.

**11.** The device or system of claim 1 or 5, wherein the optical information recording medium (1) is disc-shaped.

**12.** The device or system of claim 1 or 5, wherein the optical information recording medium (1) is card-shaped.

**13.** A hologram recording and recovering method comprising the steps of:

causing reference light (223) to be incident on substantially the same position on optical information recording medium (1) at an incident angle $\{\theta\} = [\theta_1, \theta_2, ..., \theta_M]$ (M being an integer of two or more); and
causing reference light (223) to be incident on a position adjacent to the position on the optical information recording medium (1) at an incident angle different from the incident angle $\{\theta\}$.

# FIG. 1

FIG. 2

EP 2 043 092 A1

# FIG. 3A

Insert medium ⇒ Ready

| Insert medium |
| Discriminate medium |
| Read medium data (Control data) |
| Perform learning process |
| Complete preparation of recording or recovering (Ready state) |

# FIG. 3B

Ready ⇒ Data recording

| Receive data to be recorded |
| Perform learning processes |
| Perform seek operation |
| Perform address recovering operation |
| Perform pre-cure treatment |
| Record data |
| Verify |
| Perform post-cure treatment |

# FIG. 3C

Ready ⇒ Data reproduction

| Learning processing |
| Perform seek operation |
| Perform address recovering operation |
| Recover data |

EP 2 043 092 A1

## FIG. 4

## FIG. 5

# FIG. 6

EP 2 043 092 A1

# FIG. 7

Incident angle of reference light $\left\{\begin{array}{l}(\theta_1,\theta_2,\ldots,\theta_M)+\Delta\theta \\ \theta_1,\theta_2,\ldots,\theta_M \\ (\theta_1,\theta_2,\ldots,\theta_M)+\Delta\theta \\ \theta_1,\theta_2,\ldots,\theta_M\end{array}\right.$

#2n-1
#2n
#2n+1
#2n+2

1

Odd track

Reference light **(i=1,2,...,M)**
$\theta_i$
Signal light

Even track

$\theta_i+\Delta\theta$

EP 2 043 092 A1

# FIG. 8

FIG. 9

FIG. 10

$(\theta_1,\theta_2,...,\theta_M)+\Delta\theta_1$
$\theta_1,\theta_2,...,\theta_M$
$(\theta_1,\theta_2,...,\theta_M)+\Delta\theta_2$

$(\theta_1,\theta_2,...,\theta_N)+\Delta\theta_3$
$(\theta_1,\theta_2,...,\theta_N)+\Delta\theta_4$
$(\theta_1,\theta_2,...,\theta_N)+\Delta\theta_5$

$(\theta_1,\theta_2,...,\theta_M)+\Delta\theta_6$
$(\theta_1,\theta_2,...,\theta_M)+\Delta\theta_7$
$(\theta_1,\theta_2,...,\theta_M)+\Delta\theta_8$

#n-1
#n
#n+1

1

FIG. 11

#n-1
#n
#n+1

$(\theta_1,\theta_2,...,\theta_M)+\Delta\theta_1$
$\theta_1,\theta_2,...,\theta_M$
$(\theta_1,\theta_2,...,\theta_M)+\Delta\theta_2$

$(\theta_1,\theta_2,...,\theta_M)+\Delta\theta_6$
$(\theta_1,\theta_2,...,\theta_M)+\Delta\theta_7$
$(\theta_1,\theta_2,...,\theta_M)+\Delta\theta_8$

$(\theta_1,\theta_2,...,\theta_N)+\Delta\theta_3$
$(\theta_1,\theta_2,...,\theta_N)+\Delta\theta_4$
$(\theta_1,\theta_2,...,\theta_N)+\Delta\theta_5$

1

Europäisches
Patentamt

European
Patent Office

Office européen
des brevets

# EUROPEAN SEARCH REPORT

Application Number

EP 08 01 5071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | EP 1 850 337 A (DAEWOO ELECTRONICS CORP [KR]) 31 October 2007 (2007-10-31) * paragraph [0010] - paragraph [0012] * * paragraph [0029] - paragraph [0040] * | 1-7,9, 11-13 | INV. G11B7/085 G11B7/095 G11B7/007 G11B7/0065 |
| D,A | JP 2006 243243 A (SONY CORP) 14 September 2006 (2006-09-14) * abstract * | 1-13 | |
| A | EP 1 708 181 A (FUJITSU LTD [JP]) 4 October 2006 (2006-10-04) * the whole document * | 1-13 | |
| A | US 2007/216981 A1 (MATSUMURA YOSHIYUKI [US] ET AL) 20 September 2007 (2007-09-20) * paragraph [0021] - paragraph [0027] * * paragraph [0060] - paragraph [0075]; figures 1,2 * | 10 | |
| | | | TECHNICAL FIELDS SEARCHED (IPC) G11B |

The present search report has been drawn up for all claims

| Place of search | Date of completion of the search | Examiner |
|---|---|---|
| The Hague | 7 November 2008 | Pacholec, Darek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 01 5071

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2008

| Patent document cited in search report | | Publication date | Patent family member(s) | | Publication date |
|---|---|---|---|---|---|
| EP 1850337 | A | 31-10-2007 | JP 2007293309 A | | 08-11-2007 |
| | | | US 2007247683 A1 | | 25-10-2007 |
| JP 2006243243 | A | 14-09-2006 | NONE | | |
| EP 1708181 | A | 04-10-2006 | CN 1841524 A | | 04-10-2006 |
| | | | JP 2006277873 A | | 12-10-2006 |
| | | | KR 20060106662 A | | 12-10-2006 |
| | | | US 2006221795 A1 | | 05-10-2006 |
| US 2007216981 | A1 | 20-09-2007 | CN 101042892 A | | 26-09-2007 |
| | | | JP 2007256949 A | | 04-10-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007255722 A
- JP 2004272268 A
- WO 2004102542 A
- JP 2006243243 A